Europäisches Patentamt

European Patent Office

Office européen des brevets

(11) Veröffentlichungsnummer: **0 243 570**
**B1**

(12) # EUROPÄISCHE PATENTSCHRIFT

(45) Veröffentlichungstag der Patentschrift:
18.01.89

(51) Int. Cl.⁴: **G01N 1/22**

(21) Anmeldenummer: **86890120.8**

(22) Anmeldetag: **29.04.86**

(54) Entnahmesonde für heisse Gasproben.

(43) Veröffentlichungstag der Anmeldung:
04.11.87 Patentblatt 87/45

(45) Bekanntmachung des Hinweises auf die Patenterteilung:
18.01.89 Patentblatt 89/3

(84) Benannte Vertragsstaaten:
AT BE CH DE FR GB IT LI LU NL SE

(56) Entgegenhaltungen:
WO-A-85/00179
DE-A- 2 460 122
DE-A- 3 305 232
FR-A- 2 133 081

(73) Patentinhaber: **VOEST-ALPINE
INDUSTRIEANLAGENBAU GESELLSCHAFT M.B.H.,**
**Turmstrasse 44, A-4020 Linz(AT)**

(72) Erfinder: **Ramsner, Wolfgang, Hainbuch 216,
A-4431 Haiderhofen(AT)**
Erfinder: **Ruemer, Karl, Mauthausener Strasse 132,
A-4222 St. Georgen(AT)**
Erfinder: **Hölzl, Kurt, Wart 35, A-4152 Sarleinsbach(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz(AT)**

**Beschreibung**

Die Erfindung bezieht sich auf eine Entnahmesonde für heiße Gasproben, bestehend aus einem Innenrohr zur Gasführung und einem das Innenrohr umschließenden, eine Flüssigkeitskühlung aufweisenden Mantel.

Um bei Prozessen, bei denen heiße Gase auftreten, die Prozeßführung in Abhängigkeit von der Zusammensetzung dieser Heißgase steuern zu können, müssen aus dem Reaktionsraum Gasproben über eine Entnahmesonde abgezogen werden (siehe z.B. DE-A 2 460 122). Diese Entnahmesonden sind aufgrund der Heißgase einer hohen Temperaturbelastung ausgesetzt, so daß es erforderlich wird, den Mantel dieser Entnahmesonden zu kühlen. Die Mantelkühlung der Entnahmesonden bringt allerdings die Gefahr einer Taupunktunterschreitung mit sich, was zu einer unerwünschten Kondensatbildung im Innenrohr der Entnahmesonde führen kann. Diese Kondensatbildung ist insbesondere dann unangenehm, wenn die Gasprobe mit Staub belastet ist, wie dies beispielsweise beim Kalzinieren von Zementrohmehl der Fall ist, weil sich der mitgeführte Staub mit dem Kondensat zu einem Schlamm verbindet, der an dem Innenrohr der Entnahmesonde anbacken und den freien Strömungsquerschnitt einengen kann. Um eine solche Taupunktunterschreitung zu vermeiden, ist es bekannt, die Kühlung des Mantels der Entnahmesonde so zu führen, daß die Temperatur des Kühlmittels zumindest im Bereich des die Gasprobe führenden Innenrohres stets oberhalb des Taupunktes der Gasprobe bleibt. Eine solche Kühlungsführung bedarf jedoch einer vergleichsweise aufwendigen Steuerung und bringt für alle jene Fälle besondere Probleme mit sich, bei denen der Taupunkt der Gasprobe oberhalb der Verdampfungstemperatur der für die Kühlung eingesetzten Flüssigkeit, im allgemeinen Wasser, liegt.

Der Erfindung stellt sich somit die Aufgabe, eine Entnahmesonde der eingangs geschilderten Art mit einfachen Mitteln so zu verbessern, daß eine Kondensatbildung im Innenrohr der gekühlten Entnahmesonde ausgeschlossen werden kann. Außerdem soll beim Einsatz einer Flüssigkeitskühlung ein Verdampfen der Kühlflüssigkeit selbst dann vermieden werden, wenn der Taupunkt der Gasprobe oberhalb der Verdampfungstemperatur der Kühlflüssigkeit liegt.

Die Erfindung löst die gestellte Aufgabe dadurch, daß das Innenrohr mit einer Heizung versehen und gegenüber dem gekühlten Mantel durch eine Wärmeisolierung abgeschirmt ist.

Durch das Vorsehen einer Wärmeisolierung zwischen dem Innenrohr und dem gekühlten Mantel der Entnahmesonde kann in einfacher Weise eine Rückwirkung der Kühlflüssigkeitstemperatur auf die Temperatur der Wandung des Innenrohres unterbunden werden, so daß das Innenrohr unabhängig von der Temperatur des gekühlten Außenmantels mittels einer Heizung auf einem gewünschten Temperaturniveau gehalten werden kann. Damit kann eine Taupunktunterschreitung im Bereich des Innenrohres mit Sicherheit ausgeschlossen werden, und zwar auch in den ungünstigen Fällen, bei denen der Taupunkt der abzuziehenden Gasprobe höher als der Verdampfungspunkt der Kühlflüssigkeit des Sondenmantels liegt. Es können folglich aufwendige Steuerungen für den Kühlkreislauf entfallen, weil lediglich gewährleistet werden muß, daß die Temperatur der Kühlflüssigkeit unterhalb des Verdampfungspunktes bleibt.

Obwohl für das Innenrohr der Entnahmesonde jede Heizung eingesetzt werden kann, die eine entsprechende Aufwärmung des Innenrohres erlaubt, ergeben sich besonders vorteilhafte Verhältnisse, wenn eine elektrische Widerstandsheizung vorgesehen wird, weil sich diese elektrische Widerstandsheizung in einfacher Weise in Abhängigkeit von der Temperatur des Innenrohres steuern läßt.

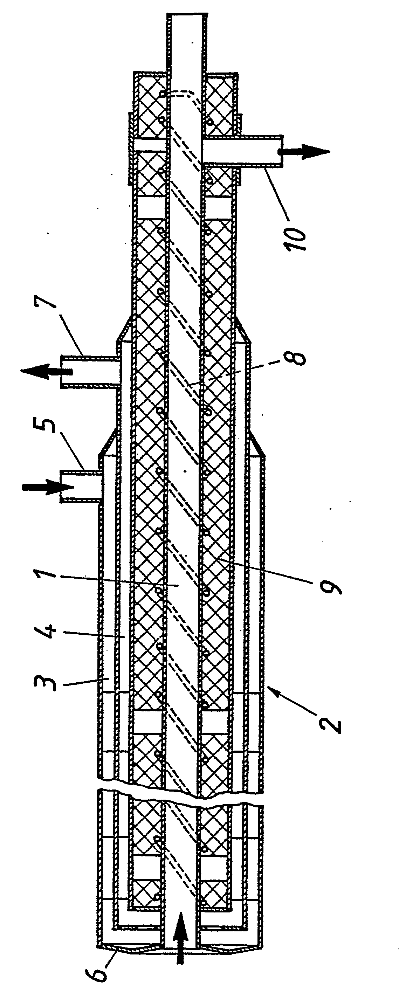

In der Zeichnung ist der Erfindungsgegenstand beispielsweise dargestellt, und zwar wird eine erfindungsgemäße Entnahmesonde für heiße Gasproben in einem vereinfachten Axialschnitt gezeigt.

Die dargestellte Entnahmesonde für heiße Gasproben besteht im wesentlichen aus einem Innenrohr 1 für die Gasführung und einem das Innenrohr 1 umschließenden Mantel 2, der zwei konzentrische Ringräume 3 und 4 für die Kühlflüssigkeit aufweist. Die über einen Anschlußstutzen 5 zugeführte Kühlflüssigkeit wird innerhalb des äußeren Ringraumes 3 des Mantels 2 gegen das Einführende 6 der Entnahmesonde geleitet und strömt dann nach einer Umlenkung durch den inneren Ringraum 4 zu einem Anschluß 7 für den Kühlflüssigkeitsrücklauf zurück. Das den Heißgasen innerhalb des Reaktionsraumes ausgesetzte Einführende 6 der Entnahmesonde bleibt folglich von unzulässig hohen Temperaturbelastungen frei.

Damit bei einer solchen Kühlung des Sondenmantels 2 keine Taupunktunterschreitung im Bereich des Innenrohres 1 auftreten kann, wird das Innenrohr 1 mit Hilfe einer Heizung 8 in Form wenigstens eines um das Innenrohr schraubenförmig gewundenen, elektrischen Heizleiters auf eine Temperatur aufgewärmt, die oberhalb des Taupunktes der durch das Innenrohr abgezogenen Gasprobe liegt. Eine gegenseitige Beeinflussung der Kühlung des Mantels 2 und der Heizung 8 des Innenrohres 1 der Entnahmesonde wird durch eine entsprechende Wärmeisolierung 9 zwischen dem Innenrohr und dem Mantel 2 unterbunden. Das durch das Innenrohr 1 strömende Gas kann folglich ohne Gefahr einer Kondensatbildung innerhalb der Entnahmesonde über einen Gasanschluß 10 abgeführt und beispielsweise einem Filter zugefördert werden. Zur Steuerung der Heizung 8 kann ein Thermostat eingesetzt werden, der im Bereich des Gasanschlusses 10 an das Innenrohr 1 angeschlossen ist und die Heizung 8 einschaltet, sobald die Temperatur des Innenrohres im Bereich des kalten Austrittsendes eine vorgegebene Grenztemperatur unterschreitet.

**Patentansprüche**

Entnahmesonde für heiße Gasproben, bestehend aus einem Innenrohr (1) zur Gasführung und einem das Innenrohr (1) umschließenden, eine Flüssigkeitskühlung aufweisenden Mantel (2), dadurch gekennzeichnet, daß das Innenrohr (1) mit einer Heizung (8) versehen und gegenüber dem gekühlten Mantel (2) durch eine Wärmeisolierung (9) abgeschirmt ist.

## Claims

A probe for extracting hot gas samples, which probe consists of an inner tube for conducting gas and a jacket (2), which surrounds the inner tube (1) and contains a liquid coolant, characterized in that the inner tube (1) is provided with heating means (8) and is shielded by heat insulation (9) from the cooled jacket (2).

## Revendications

Sonde de prélèvement pour échantillons de gaz très chauds, constituée par un tube interne (1) servant au passage du gaz et par une chemise (2) enserrant le tube interne (1) et présentant un dispositif de refroidissement à liquide, caractérisée par le fait que le tube interne (1) est pourvu d'un dispositif (8) de chauffage et est séparé par un isolement thermique (9) vis-à-vis de la chemise (2) refroidie.

EP 0 243 570 B1